# EUROPEAN PATENT APPLICATION

(11) **EP 4 243 382 A1**
(43) Date of publication of application: **13.09.2023**
(21) Application number: 21888650.5
(22) Date of filing: 05.11.2021
(51) Int. Cl.: H04L 67/60, H04L 67/10

(54) **RESOURCE MANAGEMENT METHOD AND DEVICE, COMPUTER SYSTEM, AND READABLE STORAGE MEDIUM**

(30) Priority: 09.11.2020 CN 202011242896
(71) Applicant: Beijing Jingdong Shangke Information Technology Co., Ltd., Beijing 100086 (CN); Beijing Jingdong Century Trading Co., Ltd., Beijing 100176 (CN)
(72) Inventor: ZUO, Kai, Beijing 100086 (CN)
(74) Representative: Witte, Weller & Partner Patentanwälte mbB
(86) International application number: PCT/CN2021/128968
(87) International publication number: WO 2022/095958

(57) **Abstract**

The present disclosure provides a method of managing a resource, including: creating, in response to an operation of a user joining in a proprietary cloud platform, a shadow account for the user on the proprietary cloud platform; determining a resource pool corresponding to the shadow account; and accessing, in response to the user accessing the proprietary cloud platform, a resource in the resource pool corresponding to the shadow account based on a preset access policy. The present disclosure further provides an apparatus of managing a resource, a computer system, and a computer-readable storage medium.

## Description

This application claims priority to Chinese Patent Application No. 202011242896.6, filed on November 9, 2020, the entire content of which is incorporated herein in its entirety by reference.

### TECHNICAL FIELD

The present disclosure relates to the field of Internet technology, and more specifically, to a method and an apparatus of managing a resource, a computer system, and a readable storage medium.

### BACKGROUND

Generally, for some industrial or proprietary cloud scenarios, in inheriting a capacity of a public cloud platform in terms of scale growth, scalability, stability, operation and maintenance, a proprietary cloud platform scheme is generally adopted in order to meet an independent management and control requirement of the business in terms of resource isolation and security. However, the proprietary cloud scheme deployed by privatization is faced with a large investment in basic platform construction. In a growth period of business, the cost of an independent construction of computer rooms and cloud platforms invested by heavy assets in an early phase is too heavy.

### SUMMARY

In view of this, the present disclosure provides a method and an apparatus of managing a resource, a computer system, and a readable storage medium, which reduce the cost of independent construction of computer rooms and basic platforms under a proprietary cloud scheme.

An aspect of the present disclosure provides a method of managing a resource, including:
creating, in response to an operation of a user joining in a proprietary cloud platform, a shadow account for the user on the proprietary cloud platform;
determining a resource pool corresponding to the shadow account; and
accessing, in response to the user accessing the proprietary cloud platform, a resource in the resource pool corresponding to the shadow account based on a preset access policy.

According to an embodiment of the present disclosure, the proprietary cloud platform is provided on a public cloud platform, and the proprietary cloud platform shares a front-end component of the public cloud platform.

According to an embodiment of the present disclosure, before the accessing, in response to the user accessing the proprietary cloud platform, a resource in the resource pool corresponding to the shadow account based on a preset access policy, including:
acquiring a login state of a current login account;
determining whether the login state is a proprietary cloud platform login state;
when the login state is not the proprietary cloud platform login state, setting a corresponding access policy for the login account and switching the login state to the proprietary cloud platform login state; and
when the login state is the proprietary cloud platform login state, accessing the proprietary cloud platform.

According to an embodiment of the present disclosure, the determining a resource pool corresponding to the shadow account includes:
acquiring a business domain in which the user joins;
acquiring a resource pool corresponding to the business domain; and
setting the resource pool corresponding to the business domain as the resource pool corresponding to the shadow account.

According to an embodiment of the present disclosure, the setting a corresponding access policy for the login account includes:
creating, according to a business domain in which the user joins, a role for the user on the proprietary cloud platform; and
granting each role an access authority to the resource in the resource pool corresponding to the shadow account.

According to an embodiment of the present disclosure, the user has at least one administrator account and/or at least one non-administrator account;
the administrator account has an access authority to all resources in the resource pool corresponding to the shadow account; and
the administrator account has an authority to grant a role for the non-administrator account.

According to an embodiment of the present disclosure, the accessing, in response to the user accessing the proprietary cloud platform, a resource in the resource pool corresponding to the shadow account based on a preset access policy includes:
acquiring, in response to the user accessing the proprietary cloud platform with the non-administrator account, a role corresponding to the non-administrator account;
acquiring an access authority of the role to the resource in the resource pool corresponding to the shadow account; and
controlling, according to the access authority, the non-administrator account to access the resource in the resource pool corresponding to the shadow account.

Another aspect of the present disclosure provides an apparatus of managing a resource, including:
a creation module configured to create, in response to an operation of a user joining in a proprietary cloud platform, a shadow account for the user on the proprietary cloud platform;
a determination module configured to determine a resource pool corresponding to the shadow account; and
an accessing module configured to access, in response to the user accessing the proprietary cloud platform, a resource in the resource pool corresponding to the shadow account based on a preset access policy.

Another aspect of the present disclosure provides a computer-readable storage medium having computer executable instructions stored thereon, wherein the instructions are used to implement the method described above when they are executed.

Another aspect of the present disclosure provides a computer program containing computer executable instructions, wherein the instructions are used to implement the method described above when they are executed.

According to an embodiment of the present disclosure, since a technical means of a shadow account is adopted on the proprietary cloud platform, a use of a resource under the shadow account by a login account may be controlled on the proprietary cloud platform, so as to achieve a technical effect of reducing the cost of independent construction of computer rooms and basic platforms under the proprietary cloud scheme.

### BRIEF DESCRIPTION OF THE DRAWINGS

Through the following description of the embodiments of the present disclosure with reference to the drawings, the above and other objectives, features and advantages of the present disclosure will be more apparent. In the drawings:
FIG. 1 schematically shows an exemplary system architecture 100 to which a method of managing a resource may be applied according to an embodiment of the present disclosure;
FIG. 2 schematically shows a flowchart of a method of managing a resource according to an embodiment of the present disclosure;
FIG. 3 schematically shows a flowchart of a method of switching a login state according to an embodiment of the present disclosure;
FIG. 4a schematically shows a flowchart of a method of determining a resource pool according to an embodiment of the present disclosure;
FIG. 4b schematically shows a diagram of account accessing according to an embodiment of the present disclosure;
FIG. 5 schematically shows a flowchart of accessing a resource according to an embodiment of the present disclosure;
FIG. 6 schematically shows a block diagram of an apparatus 600 of managing a resource according to an embodiment of the present disclosure; and
FIG. 7 schematically shows a block diagram of a computer system 700 suitable for implementing a method of managing a resource according to an embodiment of the present disclosure.

### DETAILED DESCRIPTION OF EMBODIMENTS

Hereinafter, the embodiments of the present disclosure will be described with reference to the drawings. However, it should be understood that these descriptions are only exemplary, and are not intended to limit the scope of the present disclosure. In the following detailed description, for ease of explanation, many specific details are set forth to provide a comprehensive understanding of the embodiments of the present disclosure. However, it is obvious that one or more embodiments may also be implemented without these specific details. In addition, in the following description, descriptions of well-known structures and technologies are omitted to avoid unnecessarily obscuring the concept of the present disclosure.

The terms used here are only for describing specific embodiments, and are not intended to limit the present disclosure. The terms "include", "comprise", etc. used herein indicate an existence of described characteristics, steps, operations and/or components, but do not exclude a presence or addition of one or more other characteristics, steps, operations or components.

Unless otherwise defined, all terms (including technical and scientific terms) used herein have the meanings commonly understood by those skilled in the art. It should be noted that the terms used here should be interpreted as having meanings consistent with the context of the specification, and should not be interpreted in an idealized or overly rigid manner.

In the case of using an expression similar to "at least one of A, B, C, etc.", generally speaking, it should be interpreted according to the meaning of the expression commonly understood by those skilled in the art (for example, "a system having at least one of A, B, and C" shall include, but is not limited to, a system having A alone, B alone, C alone, A and B, A and C, B and C, and/or A, B and C, etc.). In the case of using an expression similar to "at least one of A, B, or C, etc.", generally speaking, it should be interpreted according to the meaning of the expression commonly understood by those skilled in the art (for example, "a system having at least one of A, B, or C" shall include but is not limited to a system having A alone, B alone, C alone, A and B, A and C, B and C, and/ or A, B and C, etc.).

The present disclosure provides a method of managing a resource. The method includes that after a user joins in a proprietary cloud platform, the proprietary cloud platform creates a shadow account and role for the user, determines a resource pool corresponding to the shadow account, and grants a corresponding authority to the role. After the user logs in to the proprietary cloud platform, the proprietary cloud platform controls the user's access to a resource in the resource pool corresponding to the shadow account based on the user's current role and the authority corresponding to the role.

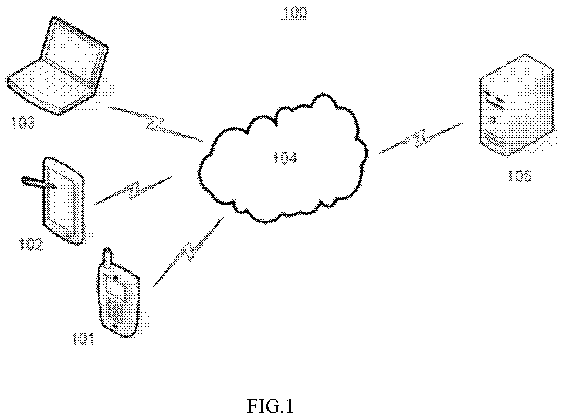

FIG. 1 schematically shows an exemplary system architecture 100 to which a method of managing a resource may be applied according to an embodiment of the present disclosure. It should be noted that FIG. 1 is only an example of system architectures in which the embodiments of the present disclosure may be applied to help those skilled in the art understand the technical content of the present disclosure, but it does not mean that the embodiments of the present disclosure may not be used in other apparatuses, systems, environments or scenarios.

As shown in FIG. 1, the system architecture 100 according to the embodiments may include terminal devices 101, 102, and 103, a network 104 and a server 105. The network 104 is used to provide a medium for communication links between the terminal devices 101, 102, and 103 and the server 105. The network 104 may include various connection types, such as a wired communication link and/or a wireless communication link, etc.

The user may use the terminal devices 101, 102, and 103 to interact with the server 105 through the network 104, so as to obtain different levels and types of information services.

The terminal devices 101, 102, and 103 may be various electronic devices with a display screen and supporting web browsing, including but not limited to smart phones, tablet computers, laptop computers, desktop computers, etc.

The server 105 is a server of a public cloud platform. The public cloud platform may be a storage cloud platform based on data storage, a computing cloud platform based on data processing, or a comprehensive cloud computing platform based on both computing and data storage processing.

It should be noted that the method of managing a resource provided by the embodiments of the present disclosure may generally be executed by the server 105. Correspondingly, the apparatus of managing a resource provided by the embodiments of the present disclosure may be disposed in the server 105. The method of managing a resource provided by the embodiments of the present disclosure may also be executed by a server or a server cluster different from the server 105 and capable of communicating with the terminal devices 101, 102, and 103 and/or the server 105. Correspondingly, the apparatus of managing a resource provided by the embodiments of the present disclosure may also be provided in the server or the server cluster different from the server 105 and capable of communicating with the terminal devices 101, 102, and 103 and/or the server 105.

It should be understood that the numbers of terminal devices, networks and cloud platforms in FIG. 1 are merely illustrative. According to implementation needs, there may be any number of terminal devices, networks and cloud platforms.

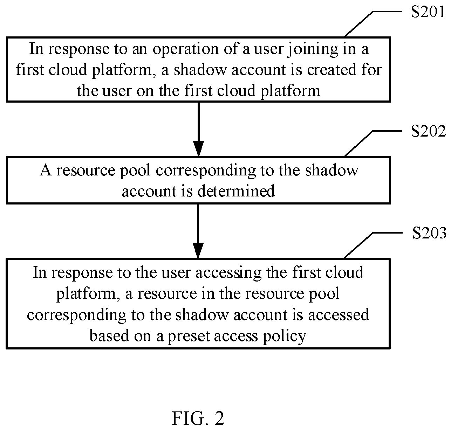

FIG. 2 schematically shows a flowchart of a method of managing a resource according to an embodiment of the present disclosure.

As shown in FIG. 2, the method includes operations S201 to S203.

In operation S201, in response to an operation of a user joining in a proprietary cloud platform, a shadow account is created for the user on the proprietary cloud platform.

In operation S202, a resource pool corresponding to the shadow account is determined.

In operation S203, in response to the user accessing the proprietary cloud platform, a resource in the resource pool corresponding to the shadow account is accessed based on a preset access policy.

In the present disclosure, the shadow account refers to an account with the same authority as an account of an administrator. The proprietary cloud platform exists on the public cloud platform. The proprietary cloud platform shares a front-end component of the public cloud platform and may provide the user with a cloud computing product and a data service. The user refers to a business, a software developer, etc. It may be understood that there may also be other proprietary cloud platforms on the public cloud platform to provide proper services for different users according to user needs.

In the present disclosure, the access policy may be an access authority to a resource for a role of the user in the business domain. Different roles have different access authorities to each resource in the resource pool corresponding to the shadow account.

Specifically, for example, after a user userA selects to join in the proprietary cloud platform, the proprietary cloud platform may create a shadow account with an administrator authority for the user userA on the proprietary cloud platform, allocate a resource pool for the shadow account, and acquire a corresponding access policy of the user userA on the proprietary cloud platform, so that the user userA may access a resource in the resource pool corresponding to the shadow account based on the access policy.

According to an embodiment of the present disclosure, for the user who joins in the proprietary cloud platform, the shadow account for the user is created and the resource pool corresponding to the shadow account is determined. When the user accesses the proprietary cloud platform, the user accesses the resource in the resource pool corresponding to the shadow account based on a preset access policy. Resource isolation and resource authority control may be achieved by setting the shadow account, thereby reducing the cost of independent construction of computer rooms and basic platforms under the private cloud scheme.

In an embodiment of the present disclosure, the proprietary cloud platform is provided on a public cloud platform, and the proprietary cloud platform shares a front-end component of the public cloud platform. When upgrading the public cloud, the proprietary cloud platform may be upgraded with the public cloud platform.

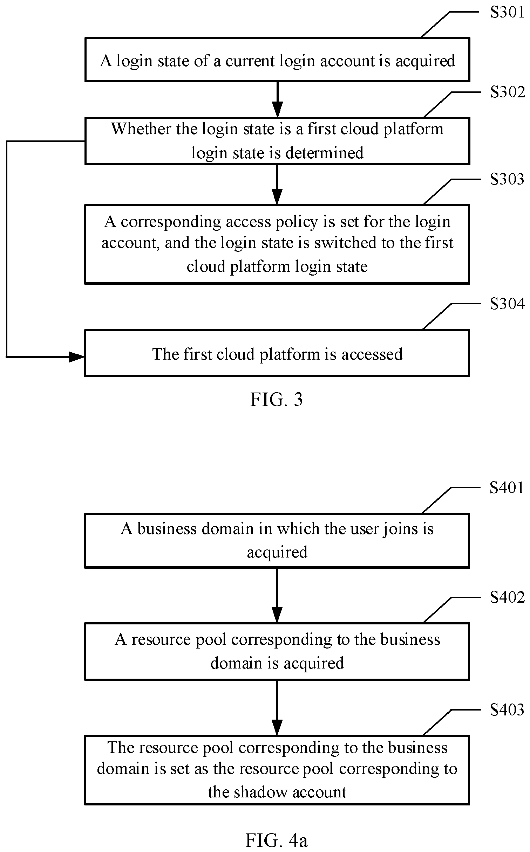

FIG. 3 schematically shows a flowchart of a method of switching a login state according to an embodiment of the present disclosure.

As shown in FIG. 3, operations S301 to S304 may further be included before the operation S203.

In operation S301, a login state of a current login account is acquired.

In operation S302, whether the login state is a proprietary cloud platform login state is determined.

When the login state is not the proprietary cloud platform login state, operation S303 is performed, and a corresponding access policy is set for the login account and the login state is switched to the proprietary cloud platform login state.

When the login state is the proprietary cloud platform login state, operation S304 is performed, and the proprietary cloud platform is accessed.

In the present disclosure, after the user logs in with an account and password, an encrypted token may be generated and stored at a user side. The token may be attached in each interaction between the user side and a server side, so that the server side may acquire a user-related information without having to attach the user's account and password every time. This token is the login state of the user. The user may use one set of account and password to log in to the proprietary cloud platform and the public cloud platform, but the login states of the user are different when logging in to the proprietary cloud platform and the public cloud platform. In the present disclosure, a login state of the user logging in to the proprietary cloud platform is the proprietary cloud platform login state. The access policy is an access policy that the user needs to adopt when accessing the proprietary cloud platform.

Specifically, in operation S303, the proprietary cloud platform may redirect a login page and issue the proprietary cloud platform login state to the current login account. When the user switches from the public cloud platform login state to the proprietary cloud platform login state, the user may use the SingleSignOn (SSO) system to issue the proprietary cloud platform login state to the current login account, so that the user may log in to the proprietary cloud platform without re-entering the account and password.

In an embodiment of the present disclosure, in operation S303, setting a corresponding access policy for the login account includes: creating, according to a business domain in which the user joins, a role for the user on the proprietary cloud platform; and granting each role an access authority to the resource in the resource pool corresponding to the shadow account.

Specifically, when the user selects to join in the proprietary cloud platform, the user may provide his own relevant information to the proprietary cloud platform, so as to acquire a needed service. The relevant information may be a business scale, a user's business domain, etc. The business domain may be logistics, retail, etc.

There are different roles under different business domains. For example, roles under the logistics business include a courier, a sorter, a merchandiser, etc. Roles under the retail business include a pre-sale customer service, an after-sales customer service, an art design, an operation, etc. It may be understood that the above is only an illustrative description and may not be understood as a specific limitation of the present disclosure.

FIG. 4a schematically shows a flowchart of a method of determining a resource pool according to an embodiment of the present disclosure.

As shown in FIG. 4a, the operation S202 includes operations S401 to S403.

In operation S401, a business domain in which the user joins is acquired.

In operation S402, a resource pool corresponding to the business domain is acquired.

In operation S403, the resource pool corresponding to the business domain is set as the resource pool corresponding to the shadow account.

After the user selects to join in the proprietary cloud platform, business domain information provided by the user may be acquired. The proprietary cloud platform selects a resource pool corresponding to the business domain. For example, for the logistics business, a resource under the logistics business domain may be selected; and for the retail business, a resource pool under the retail business domain may be selected. Then, the selected resource pool is used as the resource pool corresponding to the shadow account.

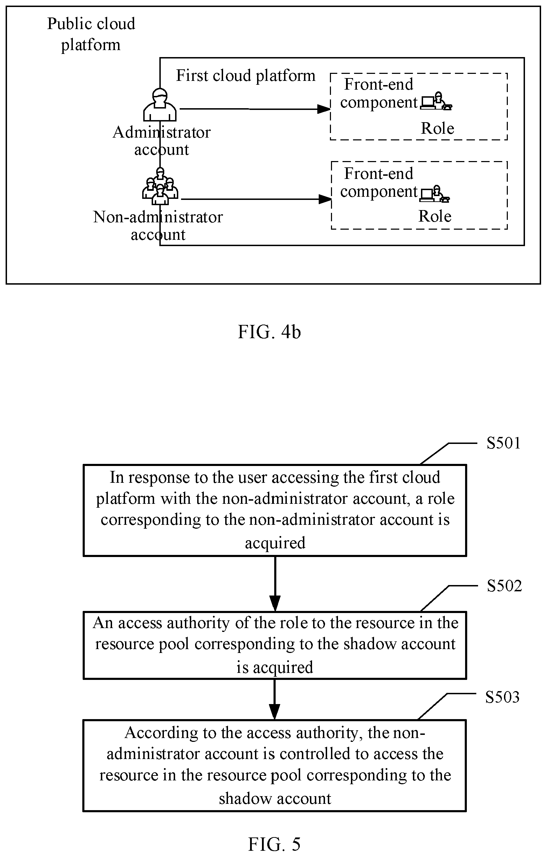

FIG. 4b schematically shows a diagram of account accessing according to an embodiment of the present disclosure. In FIG. 4b, a user having one administrator account and one non-administrator account is taken as an example.

In an embodiment of the present disclosure, the user has at least one administrator account and/or at least one non-administrator account.

The administrator account has an access authority to all resources in the resource pool corresponding to the shadow account.

The administrator account has an authority to grant a role for the non-administrator account.

Specifically, the non-administrator account may have one or more roles, and the administrator account may have all roles.

In an example, the user has one administrator account and three non-administrator accounts. The user's business domain is logistics, and corresponding roles under the logistics business are a courier, a sorter, and a merchandiser. Then the first non-administrator account is assigned the role of courier, the second non-administrator account is assigned the role of sorter, and the third non-administrator account is assigned the role of merchandiser. Alternatively, the first non-administrator account is granted the role of courier and sorter, the second non-administrator account is granted the role of sorter, and the third non-administrator account is granted the role of sorter and documentary.

FIG. 5 schematically shows a flowchart of accessing a resource according to an embodiment of the present disclosure.

As shown in FIG. 5, the operation S203 includes operations S501 to S503.

In operation S501, in response to the user accessing the proprietary cloud platform with the non-administrator account, a role corresponding to the non-administrator account is acquired.

In operation S502, an access authority of the role to the resource in the resource pool corresponding to the shadow account is acquired.

In operation S503, according to the access authority, the non-administrator account is controlled to access the resource in the resource pool corresponding to the shadow account.

In an example, the non-administrator account corresponds to a role 1. Resources in the resource pool corresponding to the shadow account include a resource 1, a resource 2, and a resource 3. The role 1 may access the resource 1 and the resource 2, but may not access the resource 3. A role 2 may access the resource 1, the resource 2, and the resource 3. A role 3 may only access the resource 3. According to this access authority, the non-administrator account may be controlled to only access the resource 1 and the resource 2.

Specifically, in operation S503, controlling, according to the access authority, the non-administrator account to access the resource in the resource pool corresponding to the shadow account may be achieved by Identity and Access Management (IAM).

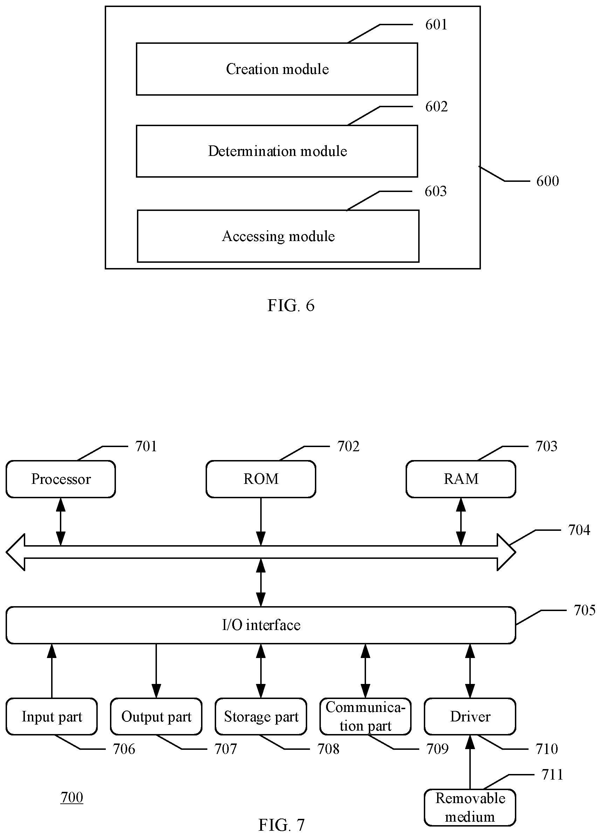

FIG. 6 schematically shows a block diagram of an apparatus of managing a resource according to an embodiment of the present disclosure.

As shown in FIG, 6, an apparatus 600 of managing a resource includes a creation module 601, a determination module 602, and an accessing module 603.

The creation module 601 is used to create, in response to an operation of a user joining in a proprietary cloud platform, a shadow account for the user on the proprietary cloud platform.

The determination module 602 is used to determine a resource pool corresponding to the shadow account.

The accessing module 603 is used to access, in response to the user accessing the proprietary cloud platform, a resource in the resource pool corresponding to the shadow account based on a preset access policy.

In an embodiment of the present disclosure, the apparatus further includes:
an acquisition module used to acquire a login state of a current login account;
a determination module used to determine whether the login state is a proprietary cloud platform login state;
a setting module used to set a corresponding access policy for the login account when the login state is not the proprietary cloud platform login state, and a switching module used to switch the login state to the proprietary cloud platform login state; and
an accessing module used to access the proprietary cloud platform when the login state is the proprietary cloud platform login state.

In an embodiment of the present disclosure, the determination module includes:
a first acquisition sub-module used to acquire a business domain in which the user joins;
a second acquisition sub-module used to acquire a resource pool corresponding to the business domain; and
a setting sub-module used to set the resource pool corresponding to the business domain as the resource pool corresponding to the shadow account.

In an embodiment of the present disclosure, the setting module includes:
a creation sub-module used to create, according to a business domain in which the user joins, a role for the user on the proprietary cloud platform; and
a granting sub-module used to grant each role an access authority to the resource in the resource pool corresponding to the shadow account.

In an embodiment of the present disclosure, the user has at least one administrator account and/or at least one non-administrator account;
the administrator account has an access authority to all resources in the resource pool corresponding to the shadow account; and
the administrator account has an authority to grant a role for the non-administrator account.

In an embodiment of the present disclosure, the accessing module includes:
a third acquisition sub-module used to acquire, in response to the user accessing the proprietary cloud platform with the non-administrator account, a role corresponding to the non-administrator account;
a fourth acquisition sub-module used to acquire an access authority of the role to the resource in the resource pool corresponding to the shadow account; and
an accessing sub-module used to control, according to the access authority, the non-administrator account to access the resource in the resource pool corresponding to the shadow account.

In an embodiment of the present disclosure, the proprietary cloud platform is provided on a public cloud platform, and the proprietary cloud platform shares a front-end component of the public cloud platform.

According to the embodiments of the present disclosure, any number of modules, sub-modules, units and sub-units, or at least part of functions thereof, may be implemented in one module. Any one or more of modules, sub-modules, units and sub-units according to the embodiments of the present disclosure may be split into a plurality of modules for implementation. Any one or more of modules, sub-modules, units and sub-units according to the embodiments of the present disclosure may be at least partially implemented as hardware circuits, such as field programmable gate array (FPGA), programmable logic array (PLA), system on chip, system on substrate, system on package, application specific integrated circuit (ASIC), or it may be implemented by hardware or firmware in any other reasonable way that integrates or encapsulates the circuit, or it is implemented by any one of software, hardware, and firmware or an appropriate combination thereof. Alternatively, one or more of the modules, sub-modules, units, and sub-units according to the embodiments of the present disclosure may be at least partially implemented as a computer program module, and when the computer program module is executed, the corresponding function may be performed.

For example, any two or more of the modules in the apparatus 600 of managing a resource may be combined into one module/unit/sub-unit for implementation, or any one of these modules/units/sub-units may be split into a plurality of modules/units/sub-units. Alternatively, at least part of the functions of one or more of these modules/units/sub-units may be combined with at least part of the functions of other modules/units/sub-units and implemented in one module/unit/sub-unit. According to the embodiments of the present disclosure, at least one module in the apparatus 600 of managing a resource may be at least partially implemented as a hardware circuit, such as field programmable gate array (FPGA), programmable logic array (PLA), system on chip, system on substrate, system on package, application specific integrated circuit (ASIC), or it may be implemented by hardware or firmware in any other reasonable way that integrates or encapsulates the circuit, or implemented by any one of software, hardware, and firmware, or an appropriate combination thereof. Alternatively, at least one module in the apparatus 600 of managing a resource may be at least partially implemented as a computer program module. When the computer program module is executed, the corresponding function may be performed.

It should be noted that a part of the apparatus of managing a resource in the embodiment of the present disclosure corresponds to a part of the method of managing a resource in the embodiment of the present disclosure. The description of the part of the apparatus of managing a resource is specifically referred to the part of the method of managing a resource, which will not be repeated here.

FIG. 7 schematically shows a block diagram of a computer system suitable for implementing the method as described above according to an embodiment of the present disclosure. The computer system shown in FIG. 7 is only an example, and should not have any limitation to the function and scope of the embodiments of the present disclosure.

As shown in FIG. 7, the computer system 700 according to the embodiments of the present disclosure includes a processor 701, which may perform various appropriate actions and processes according to a program stored in a read only memory (ROM) 702 or a program loaded from a storage part 708 into a random access memory (RAM) 703. The processor 701 may include, for example, a general-purpose microprocessor (for example, a CPU), an instruction set processor and/or a related chipset and/or a special-purpose microprocessor (for example, an application specific integrated circuit (ASIC)), etc. The processor 701 may also include an on-board memory for caching purposes. The processor 701 may include a single processing unit or multiple processing units for performing different actions of the method flow according to the embodiments of the present disclosure.

In the RAM 703, various programs and data required for the operation of the system 700 are stored. The processor 701, the ROM 702 and the RAM 703 are connected to each other through a bus 704. The processor 701 performs various operations of the method flow according to the embodiments of the present disclosure by performing programs in the ROM 702 and/or RAM 703. It should be noted that the program may also be stored in one or more memories other than the ROM 702 and the RAM 703. The processor 701 may also perform various operations of the method flow according to the embodiments of the present disclosure by performing programs stored in the one or more memories.

According to the embodiments of the present disclosure, the system 700 may further include an input/output (I/O) interface 705, and the input/output (I/O) interface 705 is also connected to the bus 704. The system 700 may also include one or more of the following components connected to the I/O interface 705: an input part 706 including a keyboard, a mouse, etc.; an output part 707 including such as a cathode ray tube (CRT), a liquid crystal display (LCD), a speaker, etc.; a storage part 708 including a hard disk, etc.; and a communication part 709 including a network interface card such as a LAN card, a modem, etc. The communication part 709 performs communication processing through a network such as the Internet. A driver 710 is also connected to the I/O interface 705 as required. A removable medium 711, such as a magnetic disk, an optical disk, a magneto-optical disk, a semiconductor memory, etc., is installed on the driver 710 as required, so that the computer program read therefrom is installed into the storage part 708 as required.

According to the embodiments of the present disclosure, the method flow according to the embodiments of the present disclosure may be implemented as a computer software program. For example, the embodiments of the present disclosure include a computer program product, which includes a computer program carried on a computer-readable storage medium, and the computer program contains program codes for implementing the method shown in the flowchart. In such the embodiments, the computer program may be downloaded and installed from the network through the communication part 709, and/or installed from the removable medium 711. When the computer program is executed by the processor 701, it executes the above-mentioned functions defined in the system of the embodiments of the present disclosure. According to the embodiments of the present disclosure, the systems, devices, apparatuses, modules, units, etc. described above may be implemented by computer program modules.

According to the present disclosure, there is also provided a computer-readable storage medium. The computer-readable storage medium may be included in the device/apparatus/system described in the above-mentioned embodiments; or it may exist alone without being assembled into the apparatus/device/system. The above-mentioned computer-readable storage medium carries one or more programs, and when the above-mentioned one or more programs are executed, the method according to the embodiments of the present disclosure is implemented.

According to the embodiments of the present disclosure, the computer-readable storage medium may be a non-volatile computer-readable storage medium, for example, may include but not limited to: portable computer disk, hard disk, random access memory (RAM), read-only memory (ROM), erasable programmable read-only memory (EPROM or flash memory), portable compact disk read-only memory (CD-ROM), optical storage device, magnetic storage device, or any suitable combination of the above. In the present disclosure, the computer-readable storage medium may be any tangible medium that contains or stores a program, and the program may be used by or in combination with an instruction execution system, apparatus, or device.

For example, according to the embodiments of the present disclosure, the computer-readable storage medium may include the ROM 702 and/or RAM 703 and/or one or more memories other than ROM 702 and RAM 703 described above.

The flowcharts and block diagrams in the drawings illustrate the possible implementation architecture, functions, and operations of the system, method and computer program product according to various embodiments of the present disclosure. In this regard, each block in the flowchart or block diagram may represent a module, program segment, or part of codes, and the above-mentioned module, program segment, or part of codes contains one or more executable instructions for implementing specified logic function. It should also be noted that, in some alternative implementations, the functions marked in the block may also occur in a different order from the order marked in the drawings. For example, two blocks shown in succession may actually be executed substantially in parallel, and the blocks may sometimes be executed in a reversed order, depending on the functions involved. It should also be noted that each block in the block diagram or flowchart, and the combination of blocks in the block diagram or flowchart, may be implemented by a dedicated hardware-based system that performs the specified functions or operations, or may be implemented by a combination of dedicated hardware and computer instructions.

Those skilled in the art may understand that the features described in the various embodiments of the present disclosure and/or the claims may be combined and/or incorporated in various ways, even if such combinations or incorporations are not explicitly described in the present disclosure. In particular, without departing from the spirit and teachings of the present disclosure, the various embodiments of the present disclosure and/or the features described in the claims may be combined and/or incorporated in various ways. All these combinations and/or incorporations fall within the scope of the present disclosure.

The embodiments of the present disclosure have been described above. However, these examples are for illustrative purposes only, and are not intended to limit the scope of the present disclosure. Although the respective embodiments are described above, this does not mean that the measures in the respective embodiments may not be advantageously used in combination. The scope of the present disclosure is defined by the appended claims and their equivalents. Those skilled in the art may make various substitutions and modifications without departing from the scope of the present disclosure, and these substitutions and modifications should all fall within the scope of the present disclosure.

## Claims

1. A method of managing a resource, comprising:
creating, in response to an operation of a user joining in a proprietary cloud platform, a shadow account for the user on the proprietary cloud platform;
determining a resource pool corresponding to the shadow account; and
accessing, in response to the user accessing the proprietary cloud platform, a resource in the resource pool corresponding to the shadow account based on a preset access policy.

2. The method according to claim 1, wherein the proprietary cloud platform is provided on a public cloud platform, and the proprietary cloud platform shares a front-end component of the public cloud platform.

3. The method according to claim 1, wherein before the accessing, in response to the user accessing the proprietary cloud platform, a resource in the resource pool corresponding to the shadow account based on a preset access policy, comprising:
acquiring a login state of a current login account;
determining whether the login state is a proprietary cloud platform login state;
when the login state is not the proprietary cloud platform login state, setting a corresponding access policy for the login account and switching the login state to the proprietary cloud platform login state; and
when the login state is the proprietary cloud platform login state, accessing the proprietary cloud platform.

4. The method according to claim 1, wherein the determining a resource pool corresponding to the shadow account comprises:
acquiring a business domain in which the user joins;
acquiring a resource pool corresponding to the business domain; and
setting the resource pool corresponding to the business domain as the resource pool corresponding to the shadow account.

5. The method according to claim 3, wherein the setting a corresponding access policy for the login account comprises:
creating, according to a business domain in which the user joins, a role for the user on the proprietary cloud platform; and
granting each role an access authority to the resource in the resource pool corresponding to the shadow account.

6. The method according to claim 1, wherein
the user has at least one administrator account and/or at least one non-administrator account;
the administrator account has an access authority to all resources in the resource pool corresponding to the shadow account; and
the administrator account has an authority to grant a role for the non-administrator account.

7. The method according to claim 6, wherein the accessing, in response to the user accessing the proprietary cloud platform, a resource in the resource pool corresponding to the shadow account based on a preset access policy comprises:
acquiring, in response to the user accessing the proprietary cloud platform with the non-administrator account, a role corresponding to the non-administrator account;
acquiring an access authority of the role to the resource in the resource pool corresponding to the shadow account; and
controlling, according to the access authority, the non-administrator account to access the resource in the resource pool corresponding to the shadow account.

8. An apparatus of managing a resource, comprising:
a creation module configured to create, in response to an operation of a user joining in a proprietary cloud platform, a shadow account for the user on the proprietary cloud platform;
a determination module configured to determine a resource pool corresponding to the shadow account; and
an accessing module configured to access, in response to the user accessing the proprietary cloud platform, a resource in the resource pool corresponding to the shadow account based on a preset access policy.

9. A computer system, comprising:
one or more processors; and
a memory configured to store one or more programs, wherein the one or more programs, when executed by the one or more processors, cause the one or more processors to implement the method of any one of claims 1 to 7.

10. A computer-readable storage medium having executable instructions stored thereon, wherein the instructions, when executed by a processor, cause the processor to implement the method of any one of claims 1 to 7.
